# EUROPÄISCHE PATENTSCHRIFT

(11) **EP 3 114 917 B1**
(45) Veröffentlichungstag und Bekanntmachung des Hinweises auf die Patenterteilung: **06.05.2020**
(21) Anmeldenummer: 16161568.7
(22) Anmeldetag: 22.03.2016
(51) Int. Cl.: A01D 34/30

(54) **GETRIEBE FÜR DEN ANTRIEB EINES MÄHMESSERS EINER ERNTEMASCHINE**
TRANSMISSION FOR DRIVING A MOWER BLADE OF A HARVESTING MACHINE
ENGRENAGE POUR L'ENTRAINEMENT D'UNE LAME DE COUPE D'UNE MOISSONNEUSE

(30) Priorität: 19.06.2015 DE 102015109833
(43) Veröffentlichungstag der Anmeldung: 11.01.2017
(73) Patentinhaber: CLAAS Selbstfahrende Erntemaschinen GmbH, 33428 Harsewinkel (DE)
(72) Erfinder: Kübbeler, Martin, 33775 Versmold (DE); Schmidt, Christoph, 44388 Dortmund (DE); Herter, Felix, 33428 Harsewinkel (DE)
(74) Vertreter: CLAAS Gruppe

(56) Entgegenhaltungen:
- EP-A1- 0 819 370
- WO-A2-2006/130186
- GB-A- 2 294 994
- US-A- 3 075 678
- Bertholt Schlecht: "Maschinenelemente 2 - Getriebe-Verzahnungen-Lagerungen", 31. Dezember 2010 (2010-12-31), Pearson Education Deutschland GmbH, München, XP002763188, ISBN: 978-3-8273-7146-1 Seiten 356-356, * Seite 356, Absatz 3 - Seite 356 *
- Bernd Kühne: "Einführung in die Maschinenelemente - Gestaltung-Berechnung-Konstruktion", 30. April 2001 (2001-04-30), B.G. Teubner, Stuttgart/Leipzig/Wiesbaden, XP002763187, ISBN: 3-519-16335-7 Seiten 347-347, * Seite 347 - Seite 347; Abbildungen 13.15, 13.16, 13.17 *

## Beschreibung

Die Erfindung betrifft ein Mähdrescherschneidwerk mit einem Getriebe für den Antrieb eines Mähmessers mit einer in einem Getriebegehäuse angeordneten Hauptwelle, die über eine Eingangswelle angetrieben wird und an welcher abtriebsseitig ein über einen Umlaufrädertrieb angetriebener Kurbelzapfen exzentrisch geführt ist, wobei der zumindest mittelbar mit dem oszillierend bewegten Mähmesser verbundene Kurbelzapfen im Betrieb des Mähdrescherschneidwerks aus den Messermomenten resultierende Wechselmomente auf die Hauptwelle überträgt, und mit einer auf der Hauptwelle angeordneten Ausgleichsmasse zum Ausgleich der aus den Wechselmomenten resultierenden Drehschwingungen.

Ein entsprechendes Getriebe für den Antrieb eines Mähmessers ist vorgesehen, um eine rotative Antriebsbewegung in eine Kurbelbewegung umzusetzen, die zur oszillierenden Bewegung des im Schneidtisch geführten Mähmessers dient. Das Mähmesser besteht aus zumindest einem Messerbalken mit daran befestigten Messerklingen, die mit in beiden Bewegungsrichtungen weisenden, schräg verlaufenden Schneiden versehen sind, wobei zur Führung des Messerbalkens am Schneidtisch Finger vorgesehen sind. Die Finger bilden dabei aufgrund ihres Zusammenwirkens mit den einzelnen Messerklingen Gegenschneiden, so dass das zu erntende Halmgut mittels der Messerklingen und der Finger von den Stoppeln abgetrennt wird. Alternativ dazu sind Mähdrescherschneidwerke bekannt, bei denen zwei Mähmesser gegenläufig zueinander bewegt werden, wobei die auf den beiden Messerbalken angeordneten Messerklingen entsprechende Schneiden und Gegenschneiden bilden.

Der im Betrieb des Mähdrescherschneidwerks oszillierende Mähbalken wird translatorisch beschleunigt und abgebremst. Dabei erfolgt die Wandlung der rotatorischen Antriebsbewegung in die translatorische Bewegung des Mähbalkens durch ein Getriebe, das unmittelbar oder über eine zwischengeschaltete Kardanwelle von einem Winkeltrieb angetrieben wird. Bei konstanter Eingangswinkelgeschwindigkeit resultieren aus der Massenkraft des Messerbalkens wechselnde Momente im Antrieb, die während eines Umlaufs des Kurbelzapfens durch eine periodische Beschleunigung und Abbremsung der Bewegung des Messerbalkens erzeugt werden und eine hohe Beanspruchung des Antriebsstranges verursachen. Die Antriebskomponenten des Antriebsstranges werden nämlich dauerhaft wechselnden Lasten ausgesetzt, wodurch sich deren Lebensdauer reduziert. Außerdem werden dadurch Schwingungen im Getriebe erzeugt, die sich über das Mähdrescherschneidwerk auf die gesamte Erntemaschine übertragen können.

Ein Mähdrescherschneidwerk mit einem Getriebe für den Antrieb eines Mähmessers der im Oberbegriff des Patentanspruchs 1 genannten Gattung ist aus der WO 2006/130186 A2 bekannt. Dabei ist innerhalb eines Gehäuses eine als Rotor bezeichnete Hauptwelle gelagert, die einerseits ein zylindrisches Teil aufnimmt und andererseits über einen Kegeltrieb angetrieben wird. Abtriebsseitig ist der um eine Längsmittelachse A rotierende zylindrische Teil mit einer ersten Ausgleichsmasse A' verbunden, die eine kreissegmentförmige Außenkontur aufweist. Weiterhin ist innerhalb des zylindrischen Teils ein exzentrisch zum zylindrischen Teil verlaufender Kurbelzapfen drehbar geführt ist, der somit um eine Längsmittelachse B rotiert. Dieser Kurbelzapfen weist eine Außenverzahnung auf, über welche der Kurbelzapfen mit der Funktion eines Planetenrades in ein im Getriebegehäuse befestigtes Hohlrad eingreift, und wird somit, bezogen auf die Drehrichtung der Hauptwelle gegenläufig angetrieben.

Am abtriebsseitigen Ende des Kurbelzapfens sind eine zweite Ausgleichsmasse B', die eine etwa halbkreisförmige Außenkontur aufweist, und ein Messerantriebszapfen befestigt. Dabei verläuft der Messerantriebszapfen wiederum exzentrisch zum Kurbelzapfen und weist eine Längsmittelachse C auf. Wie aus der Druckschrift hervorgeht, führen die beiden Ausgleichsmassen A' und B' gegenläufig zueinander unterschiedliche Umlaufbahnen aus. Ein Schwerpunkt der Ausgleichsmasse A' bewegt sich im Betrieb des Getriebes auf einer kreisförmigen Umlaufbahn, während die Umlaufbahn des Schwerpunktes der Ausgleichsmasse B' elliptisch ist.

Aus der EP 0 819 370 A1 ist ein Motormäher mit einem Mähbalken bekannt, der eine Massenausgleichseinrichtung mit zwei Massenausgleichskörpern aufweist, welche durch eine Antriebsvorrichtung des Motormähers synchron gegenläufig angetrieben werden. Es ist Aufgabe der vorliegenden Erfindung, für einen wirkungsvollen Ausgleich der wechselnden Antriebsmomente zu sorgen, der an diese angepasst ist. Dabei sollen die wechselnden Antriebsmomente so nah wie möglich am Ort ihrer Entstehung und somit am Eingang des Getriebes ausgeglichen werden.

Diese Aufgabe wird, ausgehend vom Oberbegriff des Patentanspruchs 1, in Verbindung mit dessen kennzeichnenden Merkmalen gelöst. Die vom Patentanspruch 1 abhängigen Patentansprüche beinhalten erfindungsgemäße Weiterbildungen dieser Lösung.

Danach soll die eine Ausgleichsmasse zur Erzeugung gegenüber den Wechselmomenten phasenverschobener variabler Ausgleichsmomente über ein Ausgleichsgetriebe von der Hauptwelle oder der Eingangswelle bezogen auf die Bewegung des Messerantriebszapfens um 90° phasenverschoben angetrieben werden, wobei das Ausgleichsgetriebe als Gelenkwellentrieb ausgeführt ist, der ein Teil der Hauptwelle bildet. Die translatorischen Messerbewegungen bewirken ein wechselndes Drehmoment an der Hauptwelle, so dass sich in einem Koordinatensystem, in welchem das Drehmoment über der Zeit aufgetragen ist, ein sinusförmiger Verlauf des Drehmoments um dessen Nulllinie ergibt. Der über das erfindungsgemäße Ausgleichsgetriebe variable Antrieb der einen Ausgleichsmasse bewirkt das Ausgleichsmoment, mittels dessen die Summe der kinetischen Energie des Systems aus dem oszillierenden Messerbalken und rotierender Ausgleichsmasse konstant gehalten werden kann, indem die Ausgleichsmasse in den beiden Endlagen des Messerbalkens, in denen dessen Geschwindigkeit und kinetische Energie null sind, eine hohe Winkelgeschwindigkeit aufweist. In der jeweiligen Mittellage des Messerbalkens, in der dieser seine maximale Geschwindigkeit und seine maximale kinetische Energie erreicht, soll dagegen die Winkelgeschwindigkeit der Ausgleichsmasse gering sein.

Werden diese als Ausgleichsmomente wirkenden Wechselmomente der Ausgleichsmasse in das zuvor erläuterte Koordinatensystem eingetragen, so ergibt sich ebenfalls ein sinusförmiger Verlauf der zweiten Wechselmomente der Ausgleichsmasse, der gegenüber den ersten aus dem Messerantrieb resultierenden Wechselmomenten phasenverschoben ist. Dieses dem jeweiligen Messermoment entgegenwirkende Ausgleichsmoment, das über das Ausgleichsgetriebe entsprechend variiert wird, führt dazu, dass die Summe der Momente auf null oder nahe null reduziert wird. Da die Ausgleichsmasse in vorteilhafter Weise getriebeeingangsseitig auf der Hauptwelle angeordnet ist, werden die ersten Wechselmomente in diesem Bereich geglättet.

Der Phasenversatz der Ausgleichsmomente zu den Wechselmomenten des Messerantriebs muss über die gesamte Betriebszeit des Mähdrescherschneidwerks unverändert bleiben. Dabei wird die im Wesentlichen harmonische Sinusschwingung des Messerantriebs durch eine mittels des Ausgleichsgetriebes erzeugte Sinusschwingung, die, phasenverschoben, die gleiche Frequenz und Amplitude aufweist, ausgeglichen. Dieser Ausgleich der Drehschwingungen erfolgt unmittelbar an der Hauptwelle.

Demgegenüber weist das Getriebe für den Antrieb eines Mähmessers nach der WO 2006/130186 A2 ausgangsseitig der Hauptwelle, verbunden mit dem zylindrischen Teil, die kreissegmentförmige Ausgleichsmasse auf, die konstant über die Hauptwelle angetrieben wird. Die weitere Ausgleichsmasse, die gegenläufig um eine elliptische Umlaufbahn rotiert, ist drehfest mit dem Kurbelzapfen verbunden. Ein Ausgleichsgetriebe ist folglich nicht vorgesehen.

In weiterer Ausgestaltung der Erfindung soll zur Schaffung des Ausgleichsgetriebes die Hauptwelle zumindest abschnittsweise als mit zwei in axialer Richtung zueinander beabstandeten Kreuzgelenken versehener Gelenkwellentrieb ausgebildet sein, wobei die zwischen den Kreuzgelenken liegende Gelenkwelle drehfest mit der Ausgleichsmasse verbunden ist und wobei das zweite Wechselmoment durch den Beugewinkel δ des Gelenkwellentriebs bestimmt ist. Dabei kann mittels des Gelenkwellentriebs ein Ausgleichsmoment geschaffen werden, welches phasenverschoben zum Messermoment des Messerantriebs wirkt und die gleiche Amplitude aufweist. Dieses wird bestimmt durch den Beugewinkel, die Exzentrizität und das Halbachsenverhältnis.

Der Gelenkwellentrieb wandelt die konstante Drehbewegung des Antriebs direkt in eine Drehbewegung der doppelten Frequenz um. Da in der Regel bereits eine Kardanwelle zum Antrieb der Hauptwelle des Getriebes vorgesehen ist, besteht unter Umständen die Möglichkeit, diese derart zu gestalten und mit der Ausgleichsmasse zu versehen, dass sie als Ausgleichsgetriebe wirken kann. Zu berücksichtigen ist allerdings, dass bei Vario-Schneidwerken mittels der dann telekopierbaren Kardanwelle eine Längsverstellung des Schneidtisches ermöglicht wird und sich dabei der Beugewinkel ändert.

Zur weiteren Erläuterung der Erfindung wird auf die Zeichnung verwiesen, in der ein Ausführungsbeispiel der Erfindung vereinfacht dargestellt ist.

Es zeigen:
- Figur 1: eine schematische Ansicht eines Mähdrescherschneidwerks in einer Draufsicht,
- Figur 2: einen Teil einer Seitenansicht eines Mähdrescherschneidwerks mit einem über eine Kardanwelle angetriebenen Getriebe für den Antrieb eines Mähmessers,
- Figur 3: eine Teilansicht des Getriebes im Längsschnitt, aus der ein Antrieb eines Kurbelzapfens sowie eines mit einem Messerbalken des Mähdrescherschneidwerks verbundenen Messerantriebszapfens zeigt,
- Figur 4: ein als Gelenkwellentrieb ausgebildetes Ausgleichsgetriebe mit einer Ausgleichsmasse,
- Figur 4a: eine schematische Darstellung des Gelenkwellentriebs,
- Figur 5: ein als elliptisches Antriebssystem ausgebildetes Ausgleichsgetriebe mit einer Ausgleichsmasse,
- Figur 5a: eine schematische Darstellung des elliptischen Antriebssystems,
- Figur 6: ein als Drei-Räder-Koppelgetriebe ausgebildetes Ausgleichsgetriebe mit einer Ausgleichsmasse,
- Figur 6a: eine schematische Darstellung des in das Getriebe integrierten Drei-Räder-Koppelgetriebes,
- Figur 6b: ein Getriebeschema eines Getriebes zum Antrieb eines Mähwerks, dem ein als Drei-Räder-Koppelgetriebe ausgebildetes Ausgleichsgetriebe zugeordnet ist,
- Figur 7: ein als umlaufende Schubkurbel ausgebildetes Ausgleichsgetriebe mit einer Ausgleichsmasse,
- Figur 7a: eine schematische Darstellung der umlaufenden Schubkurbel,
- Figur 8: ein als umlaufendes Schubgelenk ausgebildetes Ausgleichsgetriebe mit einer Ausgleichsmasse,
- Figur 8a: eine schematische Darstellung des umlaufenden Schubgelenks,
- Figur 9: ein als Exzenterkoppelgetriebe ausgebildetes Ausgleichsgetriebe mit einer Ausgleichsmasse,
- Figur 9a: eine schematische Darstellung des Exzenterkoppelgetriebes,
- Figur 10: ein Diagramm, in dem die aus dem Messerantrieb resultierenden Wechselmomente und die mit dem Ausgleichsgetriebe erzielten Ausgleichsmomente über der Zeit eingetragen sind,
- Figur 11: ein Planetenrad mit angebundener Ausgleichsmasse aufweisendes Koppelgetriebe und
- Figur 11a: eine schematische Darstellung des Koppelgetriebes nach Figur 11.

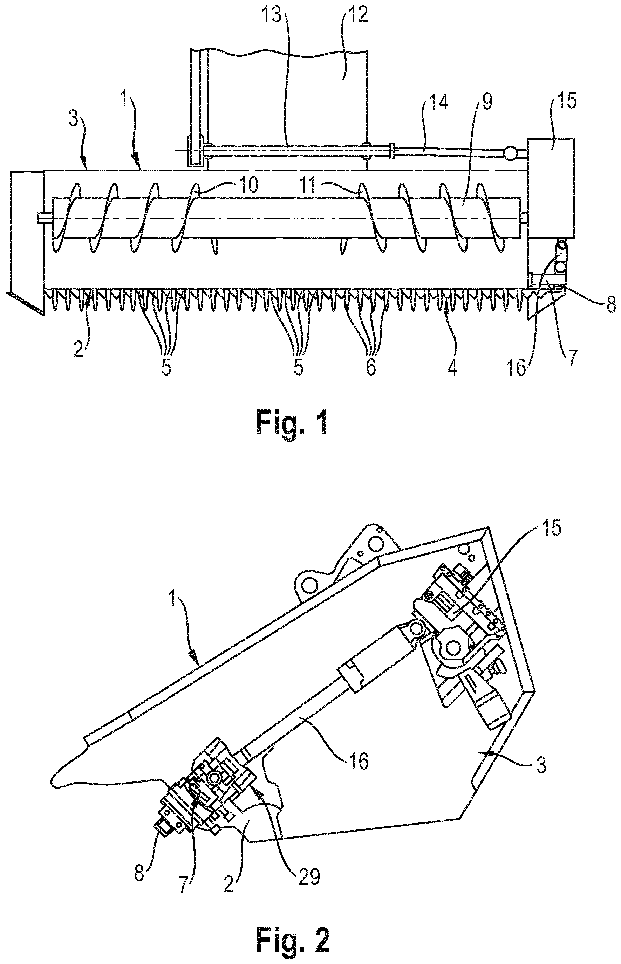

In der Figur 1 ist mit 1 ein Schneidwerk dargestellt, das einen Schneidtisch 2 und eine Schneidwerksmulde 3 aufweist. Der Schneidtisch 2 nimmt ein Mähmesser 4 auf, das aus einem nicht näher dargestellten Messerbalken und einer Vielzahl darauf befestigter Messerklingen 5 besteht, die in beide Bewegungsrichtungen weisende Schneiden aufweisen. Dabei ist das Mähmesser 4 in einer Vielzahl von Fingern 6 geführt, welche am Schneidtisch 2 befestigt sind und mit ihren Spitzen in Mährichtung weisen.

Weiterhin ist an einem Ende des Mähmessers 4 ein Getriebe 7 angeordnet, wobei dieses Getriebe 7 das Mähmesser 4 mit Hilfe eines Messerantriebszapfens 8 antreibt. Die Schneidwerksmulde nimmt einen Querförderer 9 auf, der mit gegenläufigen Schneckengängen 10 und 11 versehen ist, so dass das vom Mähmesser 4 im Zusammenwirken mit den Fingern 6 geschnittene Erntegut mittig der Schneidwerksmulde 3 zusammengeführt wird. Von dort aus gelangt das Erntegut in einen Schrägförderer 12, der dieses anschließend einer nicht dargestellten Aufbereitungseinrichtung, wie beispielsweise einer Dresch- und Trenneinrichtung eines Mähdreschers zuführt.

Das gesamte Schneidwerk 1 ist vorzugsweise durch eine Kuppeleinrichtung mit dem Schrägförderer 12 verbindbar, wobei der Antrieb des Schneidwerks 1 von einer im Schrägförderer 12 angeordneten Welle 13 aus über eine erste Kardanwelle 14 auf einen Winkeltrieb 15 erfolgt. Dieser Winkeltrieb 15 treibt zum einen das Getriebe 7 und zum anderen den Querförderer 9 sowie eine nicht näher dargestellte Haspel an. Zum Antrieb des Getriebes 7 geht, wie der Figur 1 entnommen werden kann, von dem Winkeltrieb 15 eine zweite Kardanwelle 16 aus, die mit ihrem anderen Ende trieblich mit dem Getriebe 7 verbunden ist. An Stelle dieser zweiten Kardanwelle 16, mittels der eine Längsverstellung des Schneidtisches 2 gegenüber der Schneidwerksmulde 3 ermöglicht wird, kann auch eine starre Antriebswelle vorgesehen sein. Ein entsprechend der schematischen Darstellung nach Figur 1 ausgebildetes Schneidwerk 1 ist in der Figur 2 teilweise in einer Seitenansicht dargestellt.

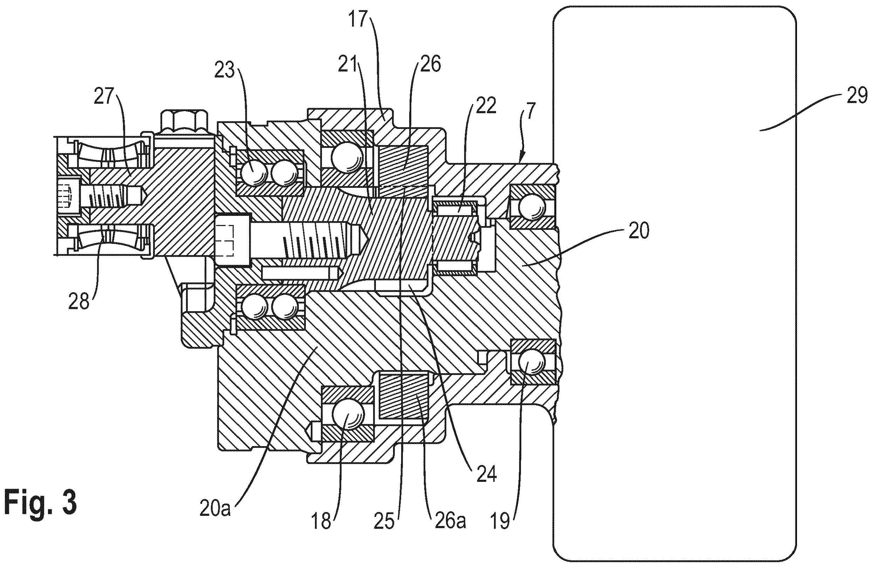

Einzelheiten zur Ausbildung des Getriebes 7 sind der nachfolgend erläuterten Figur 3 zu entnehmen. Das Getriebe 7 weist ein Getriebegehäuse 17 auf, in welchem über Wälzlager 18 und 19 eine Hauptwelle 20 gelagert ist. Diese Hauptwelle 20 nimmt über eine zylindrische Nabe 20a einen Kurbelzapfen 21 auf, der an seinem einen Ende über ein Nadellager 22 und im Bereich seines anderen Endes über ein doppelreihiges Kugellager 23 in der Hauptwelle 20 gelagert ist. Der Kurbelzapfen 21 weist ferner in einem Bereich seines Umfangs eine Außenverzahnung 24 auf, über welche ein Eingriff in eine Innenverzahnung 25 eines Hohlrades 26 erfolgt.

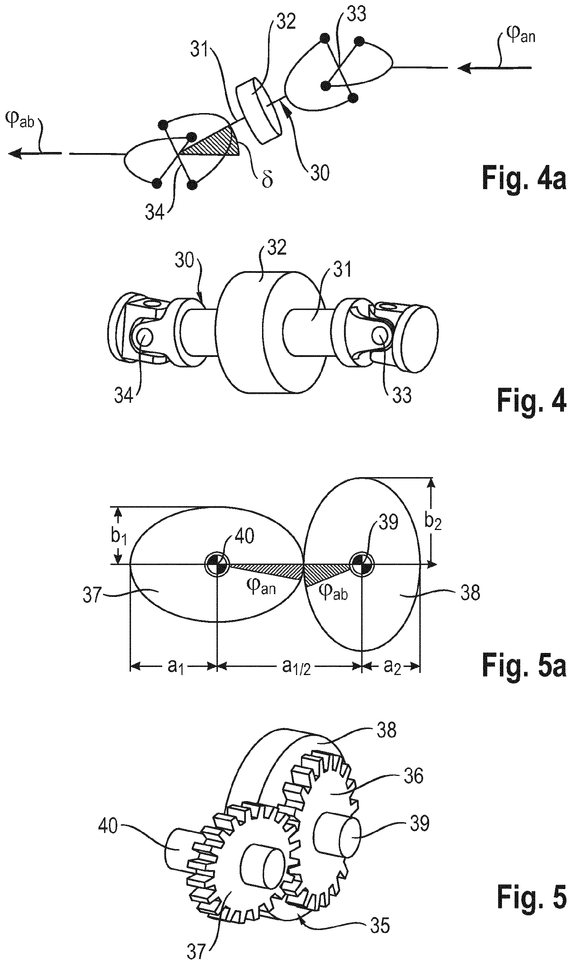

Dieses Hohlrad 26 wird durch einen ortsfest im Getriebegehäuse 17 angeordneten innenverzahnten Ring 27 gebildet. An dem Kurbelzapfen 21 ist der Messerantriebszapfen 8 befestigt, der mit einem doppelreihigen Kegelrollenlager 28 versehen ist. Im Bereich dieser Lagerung 28 wird die Kurbelbewegung mittels weiterer nicht näher dargestellter Elemente auf das Mähmesser 4 nach Figur 1 übertragen. Weiterhin ist eingangsseitig des Getriebes 7 ein die Hauptwelle 20 teilweise bildendes oder auf dieser angeordnetes Ausgleichsgetriebe 29 vorgesehen, das gemäß den nachfolgenden Figuren 4 bis 9a ausgebildet sein kann.

Nach der Figur 4 ist Ausgleichsgetriebe 29 als Gelenkwellentrieb 30 ausgeführt, der einen Teil der Hauptwelle 20 bilden soll. Dabei weist eine Gelenkwelle 31, auf der eine Ausgleichsmasse 32 befestigt ist, ein antriebsseitiges Kreuzgelenk 33 und ein abtriebsseitiges Kreuzgelenk 34 auf. Antrieb und Abtrieb sind dabei, wie insbesondere der schematischen Darstellung nach Figur 4a entnommen werden kann, soweit zueinander versetzt, dass sich über den Antriebswinkel ϕₐₙ in beiden Kreuzgelenken 33 und 34 ein relativ großer Beugewinkel δ einstellt, der zu sich periodisch ändernden Winkelgeschwindigkeiten führt. Diese Änderung der Winkelgeschwindigkeit bewirkt ein Ausgleichsmoment, das dem Messermoment entgegenwirkt.

Gemäß den Figuren 5 und 5a ist das Ausgleichsgetriebe 29 als elliptisches Antriebssystem 35 ausgebildet. Dabei sind ein elliptisches Antriebsrad 36 und ein elliptisches Abtriebsrad 37 mit einem festen Achsabstand und einem Winkelversatz um 90°angeordnet. Das Antriebsrad 36 weist, wie insbes ondere der Figur 5a zu entnehmen ist, unterschiedliche Halbachsenlängen a₁ und b₁ auf, während das Abtriebsrad 37 durch Halbachsenlängen a₂ und b₂ gekennzeichnet ist, woraus sich ein Achsabstand a_{1/2} bzw. b_{1/2} ergibt. Die jeweilige Winkelgeschwindigkeit des Abtriebsrades 37 resultiert aus den Halbachsenlängen a und b sowie dem Antriebswinkel ϕₐₙ. Das Antriebsrad 36 und eine Ausgleichsmasse 38 sind dabei drehfest mit einer Antriebswelle 39 verbunden. Eine Abtriebswelle 40 bildet im weiteren Verlauf die Hauptwelle 20 des im Zusammenhang mit der Figur 3 erläuterten Getriebes 7.

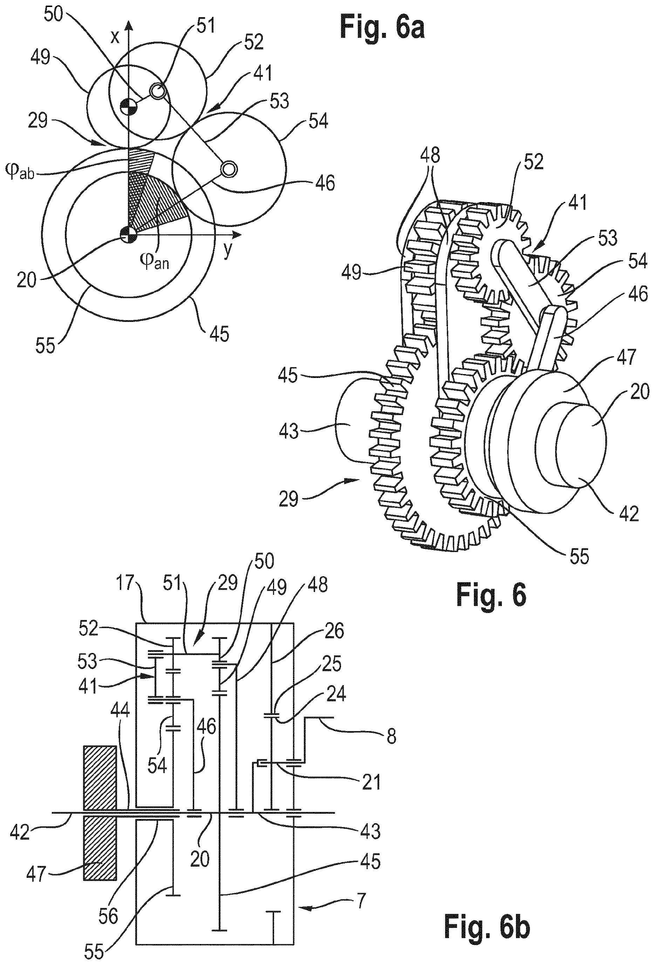

Nach den Figuren 6, 6a und 6b ist das Ausgleichsgetriebe 29 als Drei-Räder-Koppelgetriebe 41 ausgebildet. Wie insbesondere der Figur 6, die das Getriebeschema des Drei-Räder-Koppelgetriebes 41 zeigt, zu entnehmen ist, weist die Hauptwelle 20 einen eingangsseitigen Abschnitt 42 und einen ausgangsseitigen Abschnitt 43 auf. Der eingangsseitige Abschnitt 42 verläuft innerhalb einer ersten Hohlwelle 44 und ist einerseits drehfest mit einem Antriebsrad 45 verbunden, während die zu diesem konzentrisch verlaufende erste Hohlwelle 44 an einem Ende ein erstes Koppelelement 46 und am anderen Ende eine Ausgleichsmasse 47 jeweils drehfest aufnimmt.

Weiterhin ist auf der Hauptwelle 20 ein Steg 48 drehbar geführt, an dem ein erstes Planetenrad 49 drehbar gelagert ist, wobei das erste Planetenrad 49 über einen Exzenter 50 eine Planetenradwelle 51 antreibt. Diese parallel zur Hauptwelle 20 verlaufende Planetenradwelle 51 ist drehfest mit einem zweiten Planetenrad 52 verbunden und an dem vom Exzenter 50 abgewandten Ende in einem zweiten Koppelelement 53 gelagert. Mit dem zweiten Planetenrad 52 steht ein drittes als Zwischenrad ausgebildetes Planetenrad 54 im Eingriff, das am ersten Koppelelement 46 gelagert ist und sich an einem feststehenden Sonnenrad 55 abstützt.. Außerdem greift das zweite Koppelelement 53 mit einem Ende an der Planetenradwelle 51 und mit seinem anderen Ende am ersten Koppelelement 46 an, d.h., dass die beiden Koppelelemente 46 und 53 gelenkig miteinander verbunden sind.

Der ausgangsseitige Abschnitt 43 der Hauptwelle 20 nimmt, wie bereits im Zusammenhang mit der Figur 3 erläutert, den Kurbelzapfen 21 auf, dessen Außenverzahnung 24 in die Innenverzahnung 25 des Hohlrades 26 eingreift. Am Ende des Kurbelzapfens 21 ist der Messerantriebszapfen 8, der am Mähmesser 4 angreift (siehe Figur 1), befestigt. Aus der Figur 6b geht hervor, dass die vom Ausgleichsgetriebe 29 erzeugten Ausgleichsmomente auf die Hauptwelle 20 übertragen werden.

Der stirnseitigen Ansicht des Rädertriebes des Ausgleichsgetriebes nach der Figur 6a sind die Anordnung und der Verlauf der beiden Koppelelemente 46 und 53 sowie die exzentrische Anordnung des zweiten Planetenrades 52 zum ersten Planetenrad 49 zu entnehmen, wodurch eine Drehungleichförmigkeit beim Antrieb der Ausgleichsmasse 47 erzielt wird. In diesem Zusammenhang sind die unterschiedlichen Antriebswinkel ϕₐₙ am Antrieb und ϕ_{ab} am Abtrieb in der Figur 6a vermerkt.

In der Figur 6 sind der aus dem Antriebsrad 45, den Planetenrädern 49, 52 und 54 sowie dem Sonnenrad 55 bestehende Rädertrieb, die Koppelelemente 46 und 57 sowie die Ausgleichsmasse 47 perspektivisch dargestellt. Außerdem ist erkennbar, dass die Ausgleichsmasse 47, die über das Ausgleichsgetriebe 29 zu einer gezielten Drehungleichförmigkeit angeregt wird, drehbar auf der Hauptwelle 20 angeordnet ist.

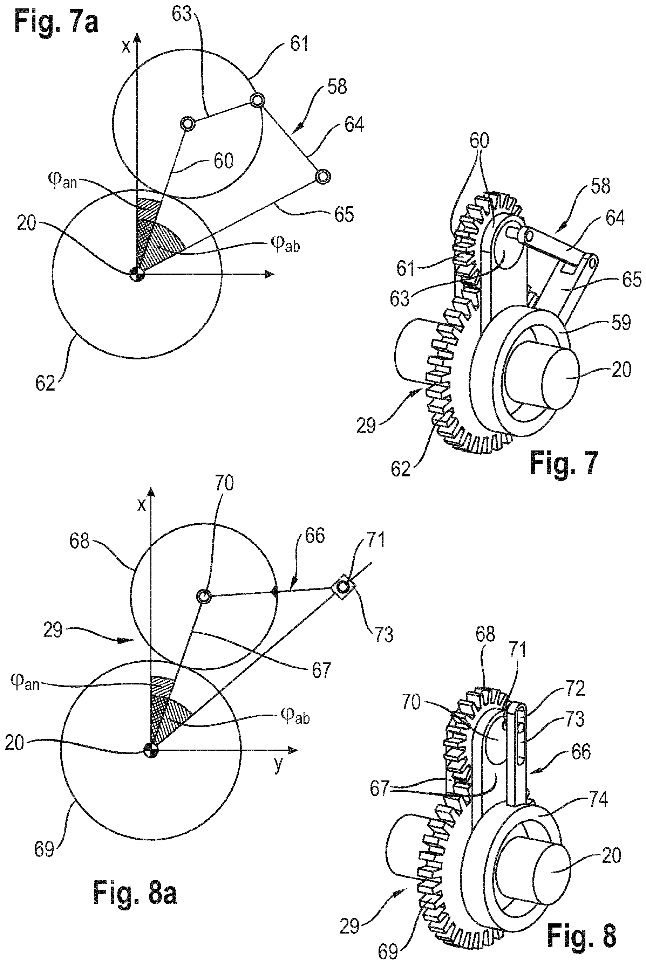

Die Figuren 7 und 7a zeigen ein als umlaufende Schubkurbel 58 ausgebildetes Ausgleichsgetriebe 29. Das entsprechende Koppelgetriebe ist in der Figur 7 perspektivisch dargestellt. Dabei treibt die Hauptwelle 20, die durch eine Ausgleichsmasse 59 hindurchgeführt ist, einen drehfest mit dieser verbundenen Steg 60 an, in welchem ein Planetenrad 61 drehbar gelagert ist. Das Planetenrad 61 stützt sich mit seiner Außenverzahnung an einem feststehenden, also mit dem nicht dargestellten Getriebegehäuse verbundenen Sonnenrad 62 ab, wodurch das Planetenrad 61 rotiert. An einem Lagerzapfen 63 oder einer Nabe des Planetenrads 61 greift eine Koppelstange 64 exzentrisch an, die an ihrem anderen Ende mit einem radial von der Ausgleichsmasse 59 ausgehenden Hebel 65 verbunden ist. Die entsprechende Anordnung ist in der Figur 7a als schematische Ansicht auf den Rädertrieb dargestellt, wobei in dieser Darstellung ebenfalls die unterschiedlichen Antriebswinkel ϕₐₙ am Antrieb und ϕ_{ab} am Abtrieb vermerkt sind.

Weiterhin ist in den Figuren 8 und 8a ein als umlaufendes Schubgelenk 66 ausgeführtes Ausgleichsgetriebe 29 dargestellt. Wie aus den beiden Figuren hervorgeht, ist ebenfalls ein Steg 67 drehfest mit der Hauptwelle 20 verbunden und dient zur Lagerung eines Planetenrades 68, das in ein feststehendes Sonnenrad 69 eingreift. Von einem das Planetenrad 68 lagernden Wellenzapfen 70 geht stirnseitig ein exzentrisch verlaufender Zapfen 71 aus, auf dem ein Ende eines Hebels 72 über ein Langloch 73 geführt ist. Das andere Ende des Hebels 72 ist radial mit einer drehbar auf der Hauptwelle 20 angeordneten Ausgleichsmasse 74 verbunden. Die Figur 8a zeigt außerdem die unterschiedlichen Antriebswinkel ϕₐₙ am Antrieb und ϕ_{ab} am Abtrieb.

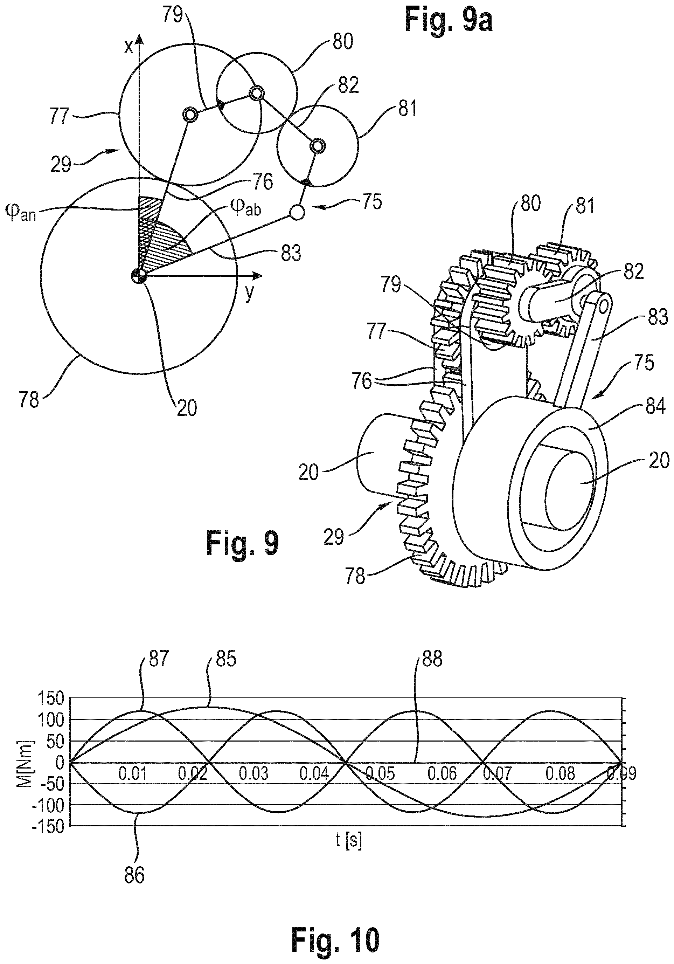

In den Figuren 9 und 9a ist mit 75 ein Exzenter-Koppelgetriebe bezeichnet, das als Ausgleichsgetriebe 29 dient. Bei diesem ist ebenfalls ein Steg 76 trieblich mit der Hauptwelle 20 verbunden, der ein drehbar in diesem geführtes erstes Planetenrad 77 aufnimmt. Das erste Planetenrad 77 greift in ein feststehendes Sonnenrad 78 ein und ist über einen Exzenter 79 drehfest mit einem zweiten Planetenrad 80 verbunden. Dieses über das erste Planetenrad 77 in Rotation versetzte zweite Planetenrad 80 kämmt mit einem dritten Planetenrad 81, wobei diese beiden Planetenräder 80 und 81 über ein an deren Achsen angreifendes Koppelelement 82 zueinander geführt sind. Im Bereich des dem dritten Planetenrad 81 zugewandten Endes des Koppelelements 82 greift an diesem ein Hebel 83 an, der, radial zu einer Ausgleichsmasse 84 verlaufend, drehfest mit dieser verbunden ist. Wie aus den Figuren 9 und 9a hervorgeht, ist der Hebel 83 an dem Koppelelement 82 exzentrisch zum dritten Planetenrad 81 angelenkt. Die Figur 9a zeigt außerdem die unterschiedlichen erzielbaren Antriebswinkel ϕₐₙ am Antrieb und ϕ_{ab} am Abtrieb.

Die Figur 10 zeigt anhand eines Diagrammes, wie sich mittels der durch das erfindungsgemäß ausgebildeten Ausgleichsgetriebes erzielten Ausgleichsmomente die aus dem Messerantrieb resultierenden Wechselmomente auf Restmomente reduzieren lassen, die, wie dargestellt, im optimalen Fall gleich null sind. Das Diagramm zeigt den Momentenverlauf M [Nm] in Abhängigkeit von der Zeit t [s]. Ein erster sinusartiger Kurvenverlauf 85 verdeutlicht dabei die Messerbewegung des Schneidwerks. Ein zweiter Kurvenverlauf 86 verdeutlicht das Messermoment, während aus einem dritten Kurvenverlauf 87 das jeweils erzielbare Ausgleichsmoment hervorgeht. Dabei sind die Kurvenverläufe 86 und 87 bezogen auf die Bewegung des Messerantriebszapfens um 90°zueinander phasenverschoben, so dass das Ausgle ichsmoment jeweils dem Messermoment entgegenwirkt. Das führt im vorliegenden Fall dazu, dass sich das resultierende Restmoment 88 auf der Nulllinie bewegt.

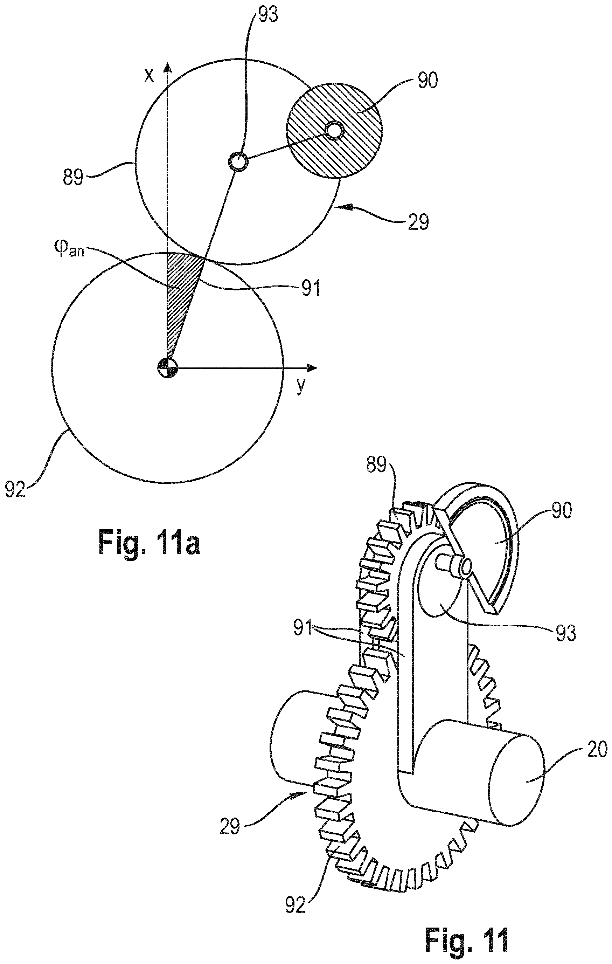

Schließlich zeigen die Figuren 11 und 11a eine weitere Ausführungsform, nicht gemäß der Erfindung, bei der das Ausgleichsgetriebe 29 als Planetenrad 89 mit einer Ausgleichsmasse 90 ausgebildet ist. Auch in diesem Fall treibt die Hauptwelle 20 einen drehfest mit dieser verbundenen Steg 91 an, in welchem das Planetenrad 89 drehbar geführt ist. Dabei stützt sich das Planetenrad 89 an einem feststehenden Sonnenrad 92 ab und wird somit in Rotation versetzt. Ein Wellenzapfen 93, auf dem das Planetenrad 89 drehfest angeordnet ist und der somit innerhalb des Stegs 91 gelagert ist, nimmt die Ausgleichsmasse 90 stirnseitig exzentrisch zur Längsmittelachse des Wellenzapfens 93 auf. Gemäß den Figuren soll die Ausgleichsmasse 90 kreissegmentartig ausgebildet sein. Es besteht aber auch die Möglichkeit, die Ausgleichsmasse 90 rotationssymmetrisch zu gestalten.

### Bezugszeichenliste

- 1: Schneidwerk
- 2: Schneidtisch
- 3: Schneidwerksmulde
- 4: Mähmesser
- 5: Messerklingen
- 6: Finger
- 7: Getriebe
- 8: Kurbelzapfen
- 9: Querförderer
- 10: Schneckengang von 9
- 11: Schneckengang von 9
- 12: Schrägförderer
- 13: Welle
- 14: Kardanwelle
- 15: Getriebegruppe
- 16: Gelenkwelle
- 17: Getriebegehäuse
- 18: Wälzlager
- 19: Wälzlager
- 20: Hauptwelle
- 21: Kurbelzapfen
- 22: Nadellager
- 23: doppelreihiges Kugellager
- 24: Außenverzahnung von 21
- 25: Innenverzahnung
- 26: Hohlrad
- 27: Messerantriebszapfen
- 28: doppelreihiges Kegelrollenlager
- 29: Ausgleichsgetriebe
- 30: Gelenkwellentrieb
- 31: Gelenkwelle
- 32: Ausgleichsmasse
- 33: antriebsseitiges Kreuzgelenk
- 34: abtriebsseitiges Kreuzgelenk
- 35: elliptisches Antriebssystem
- 36: elliptisches Antriebsrad
- 37: elliptisches Abtriebsrad
- 38: Ausgleichsmasse
- 39: Antriebswelle
- 40: Abtriebswelle
- 41: Drei-Räder-Koppeltrieb
- 42: eingangsseitiger Abschnitt von 20
- 43: ausgangsseitiger Abschnitt von 20
- 44: erste Hohlwelle
- 45: Antriebsrad
- 46: erstes Koppelelement
- 47: Ausgleichsmasse
- 48: Steg
- 49: erstes Planetenrad
- 50: Exzenter
- 51: Planetenradwelle
- 52: zweites Planetenrad
- 53: zweites Koppelelement
- 54: drittes Planetenrad
- 55: Sonnenrad
- 56: zweite Hohlwelle
- 58: umlaufende Schubkurbel
- 59: Ausgleichsmasse
- 60: Steg
- 61: Planetenrad
- 62: Sonnenrad
- 63: Lagerzapfen von 61
- 64: Koppelstange
- 65: Hebel
- 66: umlaufendes Schubgelenk
- 67: Steg
- 68: Planetenrad
- 69: Sonnenrad
- 70: Wellenzapfen
- 71: Zapfen
- 72: Hebel
- 73: Langloch
- 74: Ausgleichsmasse
- 75: Exzenter-Koppelgetriebe
- 76: Steg
- 77: erstes Planetenrad
- 78: Sonnenrad
- 79: Exzenter
- 80: zweites Planetenrad
- 81: drittes Planetenrad
- 82: Koppelelement
- 83: Hebel
- 84: Ausgleichsmasse
- 85: Kurvenverlauf für Messerbewegung
- 86: Kurvenverlauf für Messermomente
- 87: Kurvenverlauf für Ausgleichsmomente
- 88: Restmomente
- 89: Planetenrad
- 90: Ausgleichsmasse
- 91: Steg
- 92: Sonnenrad
- 93: Wellenzapfen

- δ: Beugewinkel der Gelenkwelle
- ϕₐₙ: Antriebswinkel am Antrieb
- ϕ_{ab}: Antriebswinkel am Abtrieb

## Patentansprüche

1. Mähdrescherschneidwerk (1),
• mit einem Getriebe (7) für den Antrieb eines Mähmessers (4),
• mit einer in einem Getriebegehäuse (17) angeordneten Hauptwelle (20), die über eine Eingangswelle (16) angetrieben wird und an welcher abtriebsseitig ein über einen Umlaufrädertrieb (24, 25, 26) angetriebener Kurbelzapfen (21) exzentrisch geführt ist, wobei der zumindest mittelbar mit dem oszillierend bewegten Mähmesser (4) verbundene Kurbelzapfen (21) im Betrieb des Mähmessers (4) aus den Messermomenten resultierende Wechselmomente auf die Hauptwelle (20) überträgt, und
• mit einer auf der Hauptwelle (20) angeordneten Ausgleichsmasse zum Ausgleich der aus den Wechselmomenten resultierenden Drehschwingungen,
**dadurch gekennzeichnet, dass**
die eine Ausgleichsmasse (32) zur Erzeugung gegenüber den Wechselmomenten phasenverschobener variabler Ausgleichsmomente über ein Ausgleichsgetriebe (29) von der Hauptwelle (20) oder der Eingangswelle (16) bezogen auf die Bewegung des Messerantriebszapfens (27) um 90° phasenverschoben angetrieben wird, wobei das Ausgleichsgetriebe (29) als Gelenkwellentrieb (30) ausgeführt ist, der einen Teil der Hauptwelle (20) bildet.

2. Mähdrescherschneidwerk (1) nach Patentanspruch 1, **dadurch gekennzeichnet, dass** ein Antrieb des Gelenkwellentriebes (30) und ein Abtrieb des Gelenkwellentriebes (30) soweit zueinander versetzt sind, dass sich über einen Antriebswinkel (ϕₐₙ) in zwei Kreuzgelenken (33, 34) des Gelenkwellentriebes (30) ein relativ großer Beugewinkel (δ) einstellt, der zu sich periodisch ändernden Winkelgeschwindigkeiten führt, so dass die Änderung der Winkelgeschwindigkeit ein Ausgleichsmoment bewirkt, das dem Messermoment entgegenwirkt

3. Mähdrescherschneidwerk (1) nach einem der vorherigen Ansprüche, **dadurch gekennzeichnet, dass** die Ausgleichsmasse (32) getriebeeingangsseitig auf der Hauptwelle (20) angeordnet ist, so dass die aus dem Messerantrieb resultierenden Wechselmomente in diesem Bereich geglättet werden.

4. Mähdrescherschneidwerk (1) nach einem der vorherigen Ansprüche, **dadurch gekennzeichnet, dass** zur Schaffung des Ausgleichsgetriebes (29) die Hauptwelle (20) zumindest abschnittsweise als mit zwei in axialer Richtung zueinander beabstandeten Kreuzgelenken (33 und 34) versehener Gelenkwellentrieb (30) ausgebildet ist, dass die zwischen den Kreuzgelenken (33 und 34) liegende Gelenkwelle (31) drehfest mit der Ausgleichsmasse (32) verbunden ist und dass die Ausgleichsmomente durch den Beugewinkel δ des Gelenkwellentriebs bestimmt sind.

5. Mähdrescherschneidwerk (1) nach einem der vorherigen Ansprüche, **dadurch gekennzeichnet, dass** das Getriebe (7) an einem Ende des Mähmessers (4) angeordnet ist, wobei es das Mähmesser (4) mit Hilfe eines Messerantriebszapfens (8) antreibt.

6. Mähdrescherschneidwerk (1) nach einem der vorherigen Ansprüche, **dadurch gekennzeichnet, dass** es einen Schneidtisch (2) und eine Schneidwerksmulde (3) umfasst.

7. Mähdrescherschneidwerk (1) nach Anspruch 6, **dadurch gekennzeichnet, dass** das Getriebe (7) dazu vorgesehen ist, eine rotative Antriebsbewegung in eine Kurbelbewegung umzusetzen, die zur oszillierenden Bewegung des in dem Schneidtisch (2) geführten Mähmessers (4) dient.

## Claims

1. A combine harvester header (1) comprising
• a transmission (7) for driving a cutting blade (4),
• a main shaft (20) which is arranged in a transmission housing (17) and which is driven by way of an input shaft (16) and at which on the drive output side a crank pin (21) driven by way of a planetary gear drive (24, 25, 26) is eccentrically guided, wherein the crank pin (21) which is connected at least indirectly to the oscillatingly moved cutting blade (4) transmits alternating moments resulting from the blade moments in operation of the cutting blade (4) to the main shaft (20), and
• a compensating mass arranged on the main shaft (20) for compensating for the torsional oscillations resulting from the alternating moments,
**characterised in that**
the one compensating mass (32) is driven in phase-displaced relationship through 90° with respect to the movement of the blade drive pin (27) to produce variable compensating moments which are phase-displaced with respect to the alternating moments by way of a compensating transmission (29) by the main shaft (20) or the input shaft (16), wherein the compensating transmission (29) is in the form of a cardan shaft drive (30) which forms a part of the main shaft (20).

2. A combine harvester header (1) according to claim 1 **characterised in that** a drive of the cardan shaft drive (30) and a drive output of the cardan drive shaft (30) are displaced relative to each other to such an extent that a relatively great bending angle (δ) is set by way of a drive angle (ϕₐₙ) in two universal joints (33, 34) of the cardan shaft drive (30), which angle (δ) results in periodically changing angular speeds so that the change in the angular speed causes a compensating moment which counteracts the blade moment.

3. A combine harvester header (1) according to one of the preceding claims **characterised in that** the compensating mass (32) is arranged at the transmission input side on the main shaft (20) so that the alternating moments resulting from the blade drive are smoothed **in that** region.

4. A combine harvester header (1) according to one of the preceding claims **characterised in that** to provide the compensating transmission (29) the main shaft (20) at least in portion-wise manner is in the form of a cardan shaft drive (30) provided with two universal joints (33 and 34) which are spaced in the axial direction relative to each other, the universal joint shaft (31) between the universal joints (33 and 34) is nonrotatably connected to the compensating mass (32) and the compensating moments are determined by the bending angle (δ) of the cardan shaft drive.

5. A combine harvester header (1) according to one of the preceding claims **characterised in that** the transmission (7) is arranged at an end of the cutting blade (4), wherein it drives the cutting blade (4) by means of a blade drive journal (8).

6. A combine harvester header (1) according to one of the preceding claims **characterised in that** it includes a cutting table (2) and a cutting tray (3).

7. A combine harvester header (1) according to claim 6 **characterised in that** the transmission (7) is provided to convert a rotational drive movement into a crank movement which serves for oscillating movement of the cutting blade (4) guided in the cutting table (2).

## Revendications

1. Tablier de coupe de moissonneuse-batteuse (1),
• comprenant une transmission (7) pour l'entraînement d'une lame de coupe (4),
• comprenant un arbre principal (20) qui est disposé dans un carter de transmission (17), qui est entraîné par l'intermédiaire d'un arbre d'entrée (16) et sur lequel est guidé excentriquement un maneton (21) entraîné par l'intermédiaire d'un engrenage planétaire (24, 25, 26), le maneton (21) relié au moins indirectement à la lame de coupe à déplacement oscillant (4) lors de la marche de la lame de coupe (4) transmettant à l'arbre principal (20) des moments alternés résultant des moments de lame, et
• comprenant une masse de compensation disposée sur l'arbre principal (20) pour compenser les vibrations torsionnelles,
**caractérisé en ce que**,
pour générer des moments de compensation variables déphasés par rapport aux moments alternés, une masse de compensation (32) est entraînée avec un déphasage de 90° par rapport au mouvement du maneton d'entraînement de lame (27), par l'intermédiaire d'un mécanisme de compensation (29), par l'arbre principal (20) ou par l'arbre d'entrée (16), le mécanisme de compensation (29) étant conformé en moyen d'entraînement à arbre articulé (30) qui forme une partie de l'arbre principal (20).

2. Tablier de coupe de moissonneuse-batteuse (1) selon la revendication 1, **caractérisé en ce qu'**un moyen menant du moyen d'entraînement à arbre articulé (30) et un moyen mené du moyen d'entraînement à arbre articulé (30) sont décalés l'un par rapport à l'autre de façon que, par l'intermédiaire d'un angle d'entraînement (ϕₐₙ), se forme dans deux joints à cardan (33, 34) du moyen d'entraînement à arbre articulé (30) un angle de flexion (δ) qui provoque des vitesses angulaires variables périodiquement, de façon que la variation de la vitesse angulaire génère un moment de compensation qui s'oppose au moment de lame.

3. Tablier de coupe de moissonneuse-batteuse (1) selon une des revendications précédentes, **caractérisé en ce que** la masse de compensation (32) est disposée sur l'arbre principal (20) côté entrée de transmission, de façon que les moments alternés résultant de l'entraînement de la lame, soient lissés dans cette zone.

4. Tablier de coupe de moissonneuse-batteuse (1) selon une des revendications précédentes, **caractérisé en ce que**, pour créer le mécanisme de compensation (29), l'arbre principal (20) est conçu au moins par portions sous la forme d'un moyen d'entraînement à arbre articulé (30) muni de deux joints à cardan (33 et 34) distants l'un de l'autre dans la direction axiale, **en ce que** l'arbre articulé (31) disposé entre les joints à cardan (33 et 34) est solidarisé à la masse de compensation (32), et **en ce que** les moments de compensation sont déterminés par l'intermédiaire de l'angle de flexion δ du moyen d'entraînement à arbre articulé.

5. Tablier de coupe de moissonneuse-batteuse (1) selon une des revendications précédentes, **caractérisé en ce que** la transmission (7) est disposée à une extrémité de la lame de coupe (4) en entraînant la lame de coupe (4) à l'aide d'un maneton d'entraînement de lame (8).

6. Tablier de coupe de moissonneuse-batteuse (1) selon une des revendications précédentes, **caractérisé en ce qu'**il inclut une table de coupe (2) et un bac de tablier de coupe (3).

7. Tablier de coupe de moissonneuse-batteuse (1) selon la revendication 6, **caractérisé en ce que** la transmission (7) est prévue pour convertir un mouvement d'entraînement rotatif en un mouvement de manivelle qui sert au déplacement oscillant de la lame de coupe (4) guidée dans la table de coupe (2) .
